# FASCICULE DE BREVET EUROPEEN

(11) **EP 4 117 949 B1**
(45) Date de publication et mention de la délivrance du brevet: **13.05.2026**
(21) Numéro de dépôt: 21714333.8
(22) Date de dépôt: 03.03.2021
(51) Int. Cl.: B60K 7/00, F02C 7/36, H02K 7/116, F16H 57/04, F01D 15/10, H02K 7/18

(54) **REDUCTEUR DE VITESSE EQUIPE D'UNE MACHINE ELECTRIQUE**
UNTERSETZUNGSGETRIEBE MIT EINER ELEKTRISCHEN MASCHINE
SPEED REDUCER EQUIPPED WITH AN ELECTRIC MACHINE

(30) Priorité: 09.03.2020 FR 2002328
(43) Date de publication de la demande: 18.01.2023
(73) Titulaire: SAFRAN AIRCRAFT ENGINES, 75015 Paris (FR)
(72) Inventeur: LEVISSE, Paul Ghislain Albert, 77550 MOISSY-CRAMAYEL (FR); BARET, Emmanuel Fabrice Marie, 77550 MOISSY-CRAMAYEL (FR); BOSCO, Franck Emmanuel, 77550 MOISSY-CRAMAYEL (FR); BECOULET, Julien Fabien Patrick, 77550 MOISSY-CRAMAYEL (FR); BRAULT, Michel Gilbert Roland, 77550 MOISSY-CRAMAYEL (FR)
(74) Mandataire: Gevers & Orès
(86) Numéro de dépôt international: PCT/FR2021/050361
(87) Numéro de publication internationale: WO 2021/181028

(56) Documents cités:
- WO-A1-2019/243558
- US-A- 4 291 233
- US-A1- 2019 085 714

## Description

### Domaine de l'invention

La présente invention concerne le domaine des réducteurs de vitesse, notamment pour turbomachine d'aéronef. Elle vise en particulier un réducteur de vitesse équipé d'une machine électrique et une turbomachine comprenant un tel réducteur de vitesse.

### Arrière-plan technique

L'art antérieur comprend les documents US-A1-2019/085714, qui constitue la base de la forme en deux parties, WO-A1-2019/243558 et US-A-4291233.

Une turbomachine d'aéronef telle qu'une turbomachine à double flux comprend de manière générale une soufflante carénée disposée en entrée de la turbomachine et qui est entrainée en rotation par un arbre basse pression. Un réducteur peut être interposé entre la soufflante et l'arbre basse pression pour que la soufflante tourne à une vitesse inférieure à celle de l'arbre basse pression. La réduction de la vitesse permet également d'augmenter la taille de la soufflante permettant alors d'atteindre des taux de dilution très élevés. Outre la propulsion de l'aéronef, la turbomachine assure la production de courant électrique à l'aide typiquement d'un alternateur à aimant permanent (généralement appelé PMA signifiant « Permanent Magnet Alternator ») d'un boitier d'accessoires connu sous l'acronyme anglais AGB (pour Accessory Gear Box) pour alimenter différents équipements permettant par exemple l'éclairage de la cabine de l'aéronef ou encore le système de conditionnement et de pressurisation d'air de la cabine de l'aéronef.

Il est connu d'équiper la turbomachine et en particulier le boitier d'accessoires d'une machine électrique. Une machine électrique est un dispositif électromécanique basé sur l'électromagnétisme permettant la conversion d'énergie électrique par exemple en énergie mécanique (mode générateur) ou de manière réversible, permettant la production de l'électricité à partir d'une énergie mécanique (mode moteur). La machine électrique peut se comporter également en mode générateur comme en mode en moteur.

Face au défi environnemental dans le domaine aéronautique et aux besoins de puissances électriques croissant concomitamment avec le nombre d'équipements et de nouvelles fonctions de l'aéronef, la question de l'hybridation de la turbomachine se pose. La machine électrique telle que décrite ci-dessus ne permet pas d'apporter un gain significatif de puissance électrique pour l'ensemble des fonctions de l'aéronef et le rendement de la conversion de la puissance mécanique en puissance électrique n'est pas à son optimum. De plus, l'intégration de la machine électrique dans diverses zones de la turbomachine s'avère complexe et est contrainte par l'encombrement, la tenue en température de certains composants de la machine électrique, l'accessibilité, la performance de la turbomachine elle-même, etc.

### Résumé de l'invention

L'objectif de la présente invention est de fournir une facilité d'intégration d'une machine électrique destinée à fournir une puissance électrique supplémentaire dans une turbomachine sans modifier considérablement les organes de la turbomachine.

Nous parvenons à cet objectif conformément à l'invention grâce à un réducteur à train épicycloïdal pour une turbomachine d'aéronef, le réducteur est défini par la revendication 1.

Ainsi, cette solution permet d'atteindre l'objectif susmentionné. En particulier, cette configuration permet d'une part, de ne pas encombrer la turbomachine puisque la machine électrique est intégrée au réducteur et d'autre part, de profiter de l'agencement du réducteur (couronne fixe et porte-satellites mobile) pour contrôler la position du rotor et du stator de manière à avoir un entrefer acceptable. Par ailleurs, l'intégration de la machine électrique dans le réducteur permet de fournir une approche modulaire car les organes du réducteur et de la machine électrique peuvent être assemblés indépendamment l'un à l'autre et aussi indépendamment d'autres organes de la turbomachine. Le montage et démontage sont aussi simplifiés du fait que la machine électrique et le réducteur sont situés au même endroit.

Le réducteur comprend également l'une ou plusieurs des caractéristiques suivantes, comme défini par les revendications:
- le stator de la machine électrique s'étend autour du rotor de la machine électrique.
- le stator comprend une première pièce annulaire centrée sur l'axe longitudinal et prolongeant la couronne en aval suivant l'axe longitudinal.
   En particulier les rotor et stator en aval du réducteur de vitesse sont plus accessibles contrairement à ceux de l'art antérieur qui se trouvent au cœur du réducteur de vitesse impliquant un montage de la machine électrique en même temps que chaque organes du réducteur de vitesse.
- la première pièce annulaire est rapportée sur la couronne ou est venue de matière avec la couronne.
- le rotor comprend une deuxième pièce annulaire montée sur une cage du porte-satellites.
- le porte-satellites comprend une cage annulaire portant un palier lisse sur lequel est monté le satellite.

L'invention concerne également une turbomachine d'aéronef comprenant un arbre moteur d'axe longitudinal X et une soufflante ayant un arbre de soufflante entrainé en rotation par l'arbre moteur via un réducteur présentant l'une quelconque des caractéristiques ci-dessus, la couronne étant fixée à un carter de stator de la turbomachine et le porte-satellites étant couplé à l'arbre de soufflante pour l'entraîner en rotation autour de l'axe longitudinal.

La turbomachine comprend également l'une ou plusieurs des caractéristiques suivantes, comme défini par les revendications:
- le solaire est couplé avec l'arbre moteur destiné à l'entrainer en rotation autour de l'axe longitudinal.
- l'enceinte de lubrification est délimitée au moins en partie par une virole formant au moins en partie une paroi radialement interne de la veine primaire et l'arbre de soufflante.
- le réducteur et la machine électrique sont agencés dans une enceinte de lubrification agencée en amont d'un carter interne.

L'invention concerne également un procédé d'assemblage modulaire d'une turbomachine tel que susmentionnée, le procédé comprenant les étapes suivantes :
- assembler le réducteur de vitesse tel que décrit ci-dessus,
- intégrer la machine électrique au réducteur de vitesse en montant le rotor sur le porte satellites et le stator sur la couronne, et
- monter l'ensemble comprenant le réducteur de vitesse et la machine électrique intégrée dans l'enceinte de lubrification de la turbomachine.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig.1] la figure 1 est une vue schématique et en coupe axiale d'une turbomachine double flux avec un réducteur selon l'invention ;
[Fig.2] la figure 2 est une vue schématique, en coupe axiale et de détails d'un module de soufflante de la turbomachine double flux avec un réducteur interposé entre un arbre de soufflante et un arbre moteur de la turbomachine selon l'invention ;
[Fig.3] la figure 3 est une vue en perspective, en demi-coupe axiale et en amont d'un réducteur selon l'invention ; et
[Fig.4] la figure 4 est une vue en perspective en demi-coupe axiale et en aval d'un réducteur selon l'invention.

### Description détaillée de l'invention

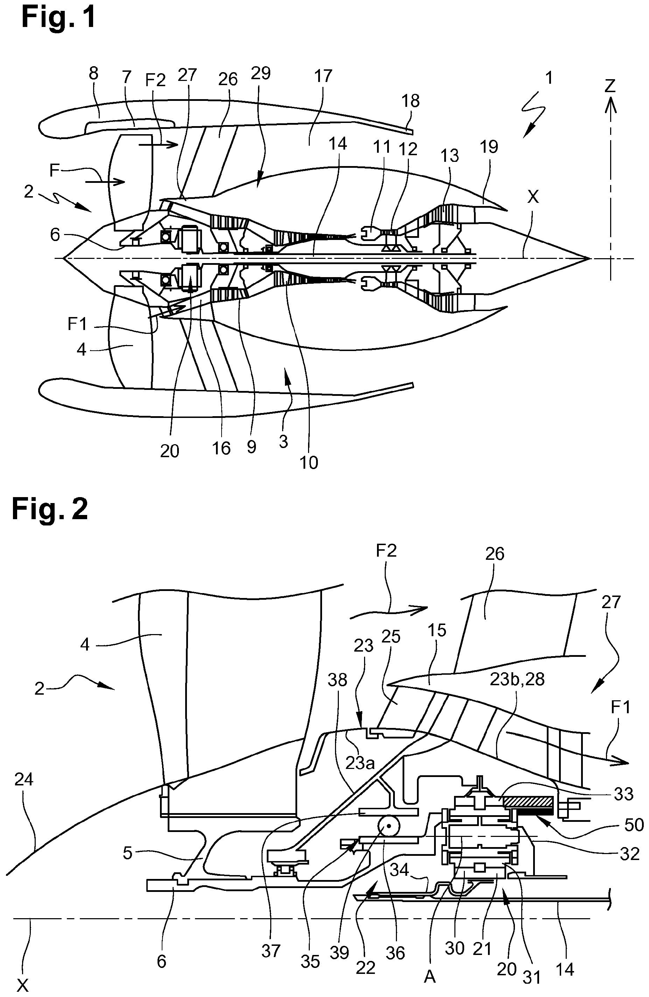

La figure 1 montre une vue en coupe axiale d'une turbomachine 1 d'axe longitudinal X à laquelle s'applique l'invention. La turbomachine représentée est une turbomachine double flux et double corps destinée à être montée sur un aéronef selon l'invention. Bien entendu, l'invention n'est pas limitée à ce type de turbomachine.

Dans la présente demande, les termes « amont », « aval », « axial » et « axialement » sont définis par rapport au sens de circulation des gaz dans la turbomachine et également suivant l'axe longitudinal (et même de gauche à droite sur la figure 1). Les termes « radial », « radialement », « interne » et « externe » sont également définis par rapport à un axe radial Z qui est perpendiculaire à l'axe X de la turbomachine.

Cette turbomachine 1 à double flux et double corps comprend une soufflante 2 qui est montée en amont d'un générateur de gaz 3. La soufflante 2 comprend une pluralité d'aubes de soufflante 4 qui s'étendent radialement depuis la périphérie d'un disque 5 (cf. figure 2) traversé par un arbre de soufflante 6. La soufflante 2 est entourée d'un carter de soufflante 7 qui porte au moins en partie une nacelle 8. Cette dernière s'étend autour du générateur de gaz 3 et suivant l'axe longitudinal X.

Le générateur de gaz 3 comprend d'amont en aval un compresseur basse pression 9, un compresseur haute pression 10, une chambre de combustion 11, une turbine haute pression 12 et une turbine basse pression 13. Le compresseur haute pression (HP) 10 est relié à la turbine HP via un arbre HP pour former un premier corps dit haute pression. Le compresseur basse pression (BP) 9 est relié à la turbine BP via un arbre BP 14 pour former un deuxième corps dit basse pression. L'arbre HP s'étend à l'intérieur de l'arbre BP 14.

Un flux d'air F qui entre dans la turbomachine via la soufflante 2 est divisé par un bec de séparation 15 de la turbomachine en un flux d'air primaire F1 qui traverse le générateur de gaz 3 et en particulier dans une veine primaire 16, et en un flux d'air secondaire F2 qui circule autour du générateur de gaz 3 dans une veine secondaire. La veine primaire 16 et la veine secondaire 17 sont coaxiales. Le flux d'air secondaire F2 est éjecté par une tuyère secondaire 18 terminant la nacelle 8 alors que le flux d'air primaire F1 est éjecté à l'extérieur de la turbomachine via une tuyère d'éjection 19 située en aval du générateur de gaz. Les flux d'air primaire et secondaire se rejoignent en sortie de leur tuyères respectives.

En référence à la figure 2, l'arbre de soufflante 6 est relié à un arbre moteur qui l'entraîne en rotation autour de l'axe longitudinal via un mécanisme de transmission de puissance 20. Dans le présent exemple, l'arbre moteur est l'arbre basse pression 14. Le mécanisme de transmission de puissance 20 permet de réduire la vitesse de la soufflante 2 à une vitesse inférieure à celle de l'arbre basse pression 14. D'autre part, le mécanisme de transmission de puissance 20 permet l'agencement d'une soufflante avec un diamètre important de manière à augmenter le taux de dilution. Le taux de dilution de la soufflante est avantageusement supérieur à 10. Préférentiellement, le taux de dilution est compris entre 12 et 18.

Le mécanisme de transmission de puissance comprend un réducteur 21 qui est ici un réducteur de vitesse de type à train épicycloïdal. Ce dernier est logé dans une enceinte de lubrification 22 agencée en amont du générateur de gaz. L'enceinte de lubrification permet de lubrifier le réducteur de vitesse 21 ainsi que des paliers de guidage en rotation. En particulier, l'enceinte de lubrification 22 est agencée dans un carter interne 23 annulaire qui est prolongé en amont par un cône d'entrée 24 de forme aérodynamique.

Le carter interne 23 comprend une virole rotor 23a annulaire qui tourne autour de l'axe longitudinal X par rapport à une virole stator 23b annulaire du carter interne 23. Le disque 5 de la soufflante 2 est monté dans la virole 23a. La virole stator 23b est reliée structurellement à un carter d'entrée 27 par des premières aubes de stator 25 (connues sous l'acronyme « IGV ») qui s'étendent radialement dans le flux d'air primaire F1 et autour de l'axe longitudinal X. Le carter d'entrée 27 porte le bec de séparation 15 en amont et le carter d'entrée 27 est prolongé en aval par un carter interveine 29. Bien entendu, la virole rotor 23a, le disque 5 forment un ensemble rotor alors que le carter d'entrée 27, l'aube de stator 25 et la virole stator 23b forment un ensemble stator. Des secondes aubes de stator 26 (connues sous l'acronyme « OGV ») relient structurellement le carter d'entrée 27 au carter de soufflante 7 qui s'entendent radialement dans le flux d'air secondaire et autour de l'axe longitudinal X. Avantageusement, le lubrifiant qui occupe l'enceinte de lubrification 22 est de l'huile sous forme de brouillard.

Le réducteur de vitesse 21 à train épicycloïdal comprend typiquement un solaire 30 (ou planétaire interne), au moins un satellite 31, un porte-satellites 32, et une couronne (planétaire externe) 33. Le réducteur comprend dans cet exemple plusieurs satellites, par exemple trois. Le solaire 30 est centré sur l'axe longitudinal X et est couplé en rotation avec l'arbre moteur (ici l'arbre BP) suivant l'axe longitudinal X via un arbre solaire 34. Ce dernier comprend des premiers éléments destinés à coopérer avec des seconds éléments d'accouplement complémentaires portés par le solaire. Les satellites 31 sont portés par le porte-satellites 32. Chaque satellite 31 engrène avec des dentures externes du solaire 30 et des dentures internes de la couronne 33. Les satellites 31 sont chacun guidé en rotation autour d'un axe de satellite A qui est parallèle à l'axe longitudinal X. Les axes de satellite A sont solidaires du porte-satellites 32. La couronne 33 entoure le solaire 30 et est centrée sur l'axe longitudinal X.

Le porte-satellites 32 est couplé en rotation avec l'arbre de soufflante 6 et la couronne 33 est solidaire d'un carter de stator de la turbomachine. En d'autres termes, la couronne 33 est fixe en rotation. De la sorte, le solaire 30 forme l'entrée du réducteur de vitesse tandis que le porte-satellites 32 forme la sortie du réducteur de vitesse. L'arbre de soufflante 6, l'arbre solaire 34 et l'arbre moteur (arbre BP 14) tournent autour de l'axe longitudinal et sont coaxiaux. Dans cet exemple de réalisation, le porte-satellites 32 et l'arbre de soufflante 6 sont monoblocs. Autrement dit, ces derniers sont formés d'un seul tenant. L'arbre de soufflante 6 est guidé en rotation par rapport à une structure fixe de la turbomachine à l'aide d'au moins un palier 35. Ce dernier est avantageusement un palier à billes. Le palier comprend en particulier une bague interne 36 montée sur l'arbre de soufflante 6, une bague externe 37 portée par un support 38 annulaire et un roulement 39 (des billes) entre les bagues interne et externe. Le support 38 annulaire est solidarisé à la structure fixe de la turbomachine.

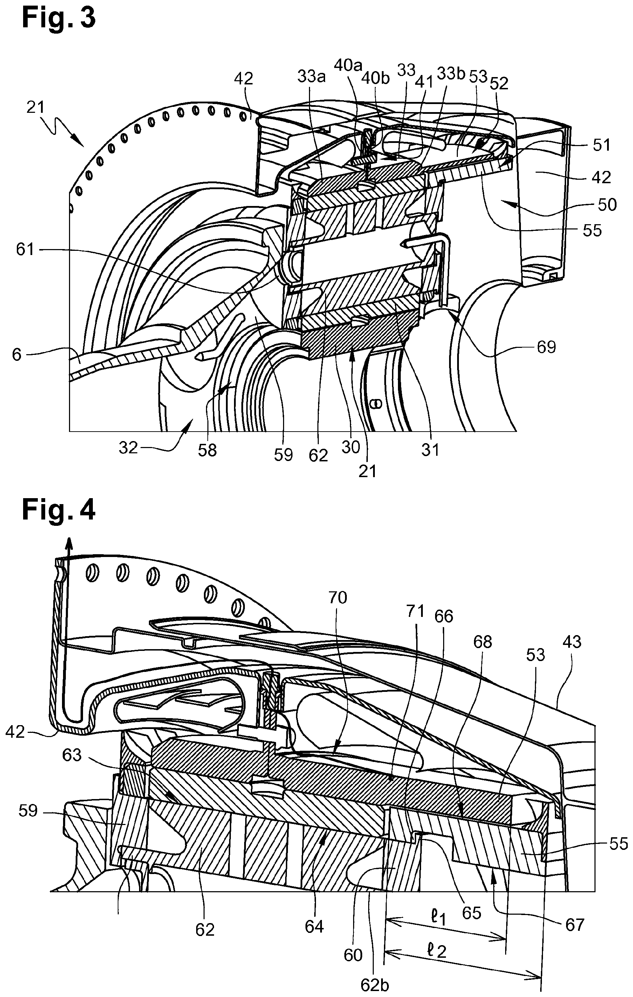

Sur les figures 3 et 4, la couronne 33 est formée d'une première partie 33a et d'une deuxième partie 33b qui sont coaxiales. Chaque première et deuxième parties 33a, 33b comprend des portions des dentures de la couronne. Chaque première et deuxième partie de couronne comprend à une extrémité une bride annulaire 40a, 40b s'étendant vers l'extérieur suivant l'axe radial. Les brides annulaires sont fixées l'une à l'autre par des organes de fixation 41 tels que de vis, boulons, écrous ou autres éléments analogues. Les brides 40a, 40b sont situées au niveau d'un plan médian perpendiculaire à l'axe longitudinal. La couronne 33 est également fixée à un porte-couronne 42 qui vient se fixer au support 38 annulaire du palier 35 avec des organes de fixation tels que décrit ci-dessus. Un capot de fermeture 43 de l'enceinte 22 recouvre la couronne 33 radialement et une portion du porte-couronne 42.

Dans le présent exemple de réalisation, la turbomachine comprend en outre une machine électrique 50 de manière à bénéficier d'une puissance électrique supplémentaire. La machine électrique 50 fonctionne en tant que générateur et en tant que moteur. Dans ce dernier cas, la machine électrique permet d'assurer une fonction propulsive en plus de la soufflante et de l'énergie fossile. En mode générateur, la machine électrique fournit une puissance électrique supplémentaire par exemple d'au moins la centaine de kilowatts.

La machine électrique comprend un rotor 51 et un stator 52. Comme nous pouvons le voir sur les figures 3 et 4, la machine électrique est agencée dans l'enceinte de lubrification 22 (dans le générateur de gaz) de manière à ce que celle-ci puisse être refroidie également par le lubrifiant. La température qui règne dans l'enceinte de lubrification est au plus de l'ordre de 150°C ce qui est tout à fait acceptable pour la machine électrique. En effet, la température des composants de la machine électrique (conducteurs électriques, isolants électriques, circuits magnétiques, capteurs de température, excitatrices) ne doit généralement pas excédée cette valeur. De plus, celle-ci dégage de forte puissance qui est directement évacuée dans l'huile de lubrification.

L'enceinte 22 est délimitée au moins en partie par la virole 23b, 28 formant au moins en partie une paroi radialement interne de la veine primaire, de l'arbre de soufflante 6 et du support 38 du palier 35. De l'air circule à l'extérieur de l'enceinte 22 comme par exemple entre le support 38 et l'ensemble carter interne 23 et carter interveine 27.

La machine électrique est ici intégrée au réducteur de vitesse 21 ce qui permet de faciliter l'intégration dans le générateur de gaz et en particulier dans l'enceinte de lubrification 22. Pour cela, le rotor 51 est monté sur le porte-satellites 32 de manière à entrainer en rotation autour de l'axe longitudinal et le stator 52 est monté sur la couronne 33.

Le stator 52 comprend une première pièce 53 annulaire autour de l'axe longitudinal et est solidaire de la couronne 33. La première pièce 53 annulaire prolonge ici vers l'aval la couronne 33 annulaire suivant l'axe longitudinal X. La première pièce 53 annulaire est une pièce rapportée (c'est-à-dire qui est séparée et/ou réalisée suivant un procédé de fabrication différent) sur la couronne. Le stator 52 (première pièce annulaire) peut être fixé par collage, vissage (vis/boulon/écrous), etc. sur la couronne 33. De manière alternative, la pièce annulaire 53 est venue de matière (c'est-à-dire d'un seul tenant) avec la couronne. Le stator 52 s'étend autour du rotor 51. La première pièce 53 annulaire est avantageusement portée par la deuxième partie 33b de la couronne (celle disposée en aval du réducteur de vitesse) comme cela est visible sur les figures 3 et 4.

Quant au rotor 51, celui-ci comprend également une deuxième pièce 55 annulaire autour de l'axe longitudinal X. Le rotor 51 peut être fixé par collage, vissage (vis/boulon/écrous), etc. sur le porte-satellites. La première pièce 53 et la deuxième pièce 55 sont concentriques. Nous comprenons que la deuxième pièce 55 s'étend en aval du réducteur de vitesse également. La première pièce 53 annulaire présente une longueur I1 sensiblement inférieure à celle I2 de la deuxième pièce 55. Pour réaliser le montage du rotor 51 sur le porte-satellites, ce dernier comprend une cage 58 annulaire centrée sur l'axe longitudinal. Le premier flanc 59 est monté en amont du réducteur de vitesse tandis que le deuxième flanc 60 est monté en aval du réducteur de vitesse. Chaque premier et deuxième flanc comprend des orifices axiaux 61 (cf. figure 3) traversant leurs parois de part et d'autre suivant un axe parallèle à l'axe longitudinal X. Chaque satellite est monté mobile en rotation autour d'un axe de stellite sur un palier 62. Chaque palier est de préférence, mais non limitativement, un palier lisse. Chaque palier est d'axe coaxial à l'axe de satellite et ses extrémités libres 62a, 62b sont montées respectivement au niveau d'un orifice correspondant des premier et deuxième flancs 59, 60. Un film d'huile circule entre la surface externe 63 de chaque palier et la surface interne 64 de chaque satellite. Ce film d'huile est alimenté en permanence par un circuit de lubrification 69 de manière à améliorer les performances du réducteur de vitesse et allonger la durée de vie des paliers lisses.

Comme nous pouvons le voir sur les figures 3 et 4 également, la deuxième pièce 55 annulaire est montée sur la périphérie du deuxième flanc 60. Le deuxième flanc 60 présente à cet effet une collerette 65 annulaire s'étendant vers l'extérieur suivant l'axe radial. La collerette 65 est logée dans une encoche 66 de la deuxième pièce 55 annulaire. L'encoche 66 est agencée dans une surface radialement interne 67 de la première pièce 53 annulaire et tournée vers l'axe longitudinal. La deuxième pièce 55 annulaire présente également une surface radialement externe 68 (opposée à la surface radialement interne suivant l'axe radial) et qui portent des aimants permanents. Les aimants permanents sont disposés en regard d'un bobinage porté par la première pièce 53 annulaire. Bien entendu, la deuxième pièce annulaire peut inversement comporter le bobinage et la première pièce annulaire peut comporter les aimants permanents.

En référence à la figure 4, un harnais électrique 70 s'étend radialement à l'extérieur de la couronne 33 et chemine vers l'extérieur du réducteur de vitesse. En particulier, la machine électrique 50 comprend au moins un câble électrique 71 qui relie le stator électrique à un système électronique de commande (tel que le FADEC ou un système de régulation à pleine autorité) de manière à permettre l'alimentation électrique de la machine électrique. Avantageusement, d'autres câbles électriques de la machine électrique 50 sont rassemblés dans cet unique harnais 70. Le harnais électrique 70 chemine à l'extérieur de l'enceinte via un bras de carter ou aube de stator. Le fait que la couronne 33 du réducteur de vitesse à train épicycloïdal soit fixe facilite notamment la sortie de ce harnais électrique à l'extérieur de l'enceinte vers des organes extérieurs de la turbomachine.

Lorsque la machine électrique 50 fonctionne en mode moteur, celle-ci ajoute un couple en sortie du réducteur 21 de manière à fournir plus de puissance par exemple à la soufflante. Une ou plusieurs batteries peuvent être installées dans l'aéronef et l'énergie électrique est amenée à la machine électrique 50 via le câble électrique 71. Cette énergie permet de mettre en rotation le rotor 51 de la machine électrique 50. L'énergie électrique est ainsi convertie en énergie mécanique. Un apport d'énergie est fourni pour participer à la mise en rotation de la soufflante 2 via l'arbre de soufflante 6.

Lorsque la machine électrique est en mode générateur, la machine électrique 50 prélève du couple sur le réducteur 21 pour fournir une puissance électrique supplémentaire. Le couple est transmis par l'arbre basse pression 14 au réducteur 21 et est transmis à l'arbre de soufflante 6 ainsi qu'à la machine électrique 50. Celle dernière convertit l'énergie mécanique en énergie électrique pour alimenter les équipements électriques tels que des batteries fixées sur l'avion, des équipements avions, ou encore des moteurs électriques fixés sur l'avion (liste non exhaustive).

Comme nous l'avons vu, l'intégration de la machine électrique 50 sur le réducteur de vitesse 21 permet de modulariser l'ensemble réducteur + machine électrique. A cet effet, lors du montage, le réducteur de vitesse 21 est d'abord assemblé avec ses différents composants. Ensuite, la machine électrique 50, avec son rotor et son stator, est montée sur le réducteur de vitesse avec le stator sur la couronne 33 et le rotor sur le porte satellites 32. Le stator et le rotor s'étendent en aval du réducteur de vitesse, et en particulier en aval de la couronne et du porte-satellite. Cette localisation facilite les montages et démontages de la machine électrique sur le réducteur de vitesse. Dans le cas où le stator est monobloc avec la couronne, le stator est assemblé sur le réducteur en même temps que la couronne. Le câble électrique 71 est relié à la machine électrique 50. Enfin, le réducteur et la machine électrique sont installés dans l'enceinte de lubrification 22 d'un seul tenant, et on a donc une modularité aisée de l'ensemble. Cet ensemble est glissé de l'amont vers l'aval pour que l'arbre solaire 34 soit couplé avec l'arbre moteur (arbre BP). Le disque 5 et l'arbre de soufflante 6 sont ensuite insérés depuis l'amont du carter interne pour coupler l'arbre de soufflante 6 au porte- satellites 32. Le cône d'entrée 24 est ensuite monté sur le carter interne pour fermer le module de soufflante.

## Revendications

1. Réducteur (21) à train épicycloïdal pour une turbomachine (1) d'aéronef, le réducteur (21) comprenant un solaire (30) et une couronne (33) qui sont centrés sur un axe longitudinal X et un porte satellites (32) qui porte au moins un satellite (31) monté mobile en rotation autour d'un axe de satellite A parallèle à l'axe longitudinal X, le solaire (30) étant mobile en rotation autour de l'axe longitudinal, le satellite (31) engrenant à la fois avec le solaire (30) et la couronne (33), le réducteur (21) comprend une machine électrique (50) intégrée à celle-ci, le réducteur est **caractérisé en ce que** le porte-satellites (32) est mobile autour de l'axe longitudinal et la couronne (33) est fixe en rotation, et **en ce que** la machine électrique (50) comprend un rotor (51) monté sur le porte-satellites (32) de manière à être entrainé en rotation autour de l'axe longitudinal X et un stator (52) monté sur la couronne (33) et **en ce qu'**un harnais électrique (70) s'étend à l'extérieur de la couronne (33) et au moins un câble électrique (71) relié au stator (52) de la machine électrique (50) circule à l'intérieur du harnais électrique (70).

2. Réducteur (21) selon la revendication précédente, **caractérisé en ce que** le stator (52) de la machine électrique (50) s'étend autour du rotor (51) de la machine électrique.

3. Réducteur (21) selon l'une quelconque des revendications précédentes, **caractérisé en ce que** le stator (52) comprend une première pièce (53) annulaire centrée sur l'axe longitudinal et prolongeant la couronne (33) en aval suivant l'axe longitudinal.

4. Réducteur (21) selon la revendication précédente, **caractérisé en ce que** la première pièce (53) annulaire est rapportée sur la couronne (33) ou est venue de matière avec la couronne (33).

5. Réducteur (21) selon la revendication précédente, **caractérisé en ce que** le rotor comprend une deuxième pièce (55) annulaire monté sur une cage (58) du porte-satellites (32).

6. Réducteur (21) selon l'une quelconque des revendications précédentes, **caractérisé en ce que** le porte-satellites (32) comprend une cage (58) annulaire portant un palier (62) lisse sur lequel est monté le satellite.

7. Turbomachine (1) d'aéronef comprenant un arbre moteur (14) d'axe longitudinal X et une soufflante (2) ayant un arbre de soufflante (6) entrainé en rotation par l'arbre moteur via un réducteur (21) selon l'une quelconque des revendications précédentes, la couronne (33) étant fixée à un carter de stator de la turbomachine et le porte-satellites (32) étant couplé à l'arbre de soufflante (6) pour l'entraîner en rotation autour de l'axe longitudinal.

8. Turbomachine selon la revendication précédente, **caractérisée en ce que** le réducteur (21) et la machine électrique (50) sont agencés dans une enceinte de lubrification (22) agencée en amont d'un carter interne.

9. Turbomachine selon l'une quelconque des revendications 7 et 8, **caractérisée en ce que** le solaire est couplé avec l'arbre moteur (14) destiné à l'entrainer en rotation autour de l'axe longitudinal.

10. Procédé d'assemblage modulaire d'une turbomachine (10) selon la revendication précédente, **caractérisé en ce qu'**il comprend les étapes suivantes :
- assembler le réducteur de vitesse (21) selon l'une quelconque des revendications 1 à 6,
- intégrer la machine électrique (50) au réducteur de vitesse (50) en montant le rotor (51) sur le porte satellites et le stator (52) sur la couronne (33), et
- monter l'ensemble de réducteur de vitesse et la machine électrique (50) intégrée dans l'enceinte de lubrification (22) de la turbomachine.

## Patentansprüche

1. Planetenuntersetzungsgetriebe (21) für eine Flugzeugturbomaschine (1), wobei das Untersetzungsgetriebe (21) ein Sonnenrad (30) und ein Hohlrad (33) umfasst, die auf einer Längsachse X zentriert sind, sowie einen Planetenradträger (32), der mindestens ein Planetenrad (31) trägt, das um eine zur Längsachse X parallele Planetenradachse A drehbar gelagert ist, wobei das Sonnenrad (30) um die Längsachse drehbar ist, wobei das Planetenrad (31) sowohl mit dem Sonnenrad (30) als auch mit dem Hohlrad (33) in Eingriff steht, das Untersetzungsgetriebe (21) eine darin integrierte elektrische Maschine (50) umfasst, das Getriebe **dadurch gekennzeichnet ist, dass** der Planetenradträger (32) um die Längsachse beweglich ist und das Hohlrad (33) drehfest ist, und dass die elektrische Maschine (50) einen Rotor (51) umfasst, der auf dem Planetenradträger (32) so angebracht ist, dass er um die Längsachse X in Drehung versetzt wird, sowie einen Stator (52), der auf das Hohlrad (33) montiert ist, und dass sich ein Kabelbaum (70) außerhalb des Hohlrads (33) erstreckt und mindestens ein mit dem Stator (52) der elektrischen Maschine (50) verbundenes elektrisches Kabel (71) innerhalb des Kabelbaums (70) verläuft.

2. Untersetzungsgetriebe (21) nach den vorstehenden Anspruch, **dadurch gekennzeichnet, dass** sich der Stator (52) der elektrischen Maschine (50) um den Rotor (51) der elektrischen Maschine erstreckt.

3. Untersetzungsgetriebe (21) nach einem der vorstehenden Ansprüche, **dadurch gekennzeichnet, dass** der Stator (52) ein erstes ringförmiges Stück (53) umfasst, das auf der Längsachse zentriert ist und das der Längsachse nachgeschaltete Hohlrad (33) verlängert.

4. Untersetzungsgetriebe (21) nach dem vorstehenden Anspruch, **dadurch gekennzeichnet, dass** das erste ringförmige Stück (53) auf das Hohlrad (33) aufgesetzt ist oder mit dem Hohlrad (33) einstückig ist.

5. Untersetzungsgetriebe(21) nach dem vorstehenden Anspruch, **dadurch gekennzeichnet, dass** der Rotor ein zweites ringförmiges Stück (55) umfasst, das auf einem Käfig (58) des Planetenradträgers (32) montiert ist.

6. Untersetzungsgetriebe (21) nach einem der vorstehenden Ansprüche, **dadurch gekennzeichnet, dass** der Planetenradträger (32) einen ringförmigen Käfig (58) aufweist, der ein glattes Lager (62) trägt, auf dem das Planetenrad montiert ist.

7. Flugzeugturbomaschine (1) mit einer Antriebswelle (14) mit einer Längsachse X und einem Gebläse (2) mit einer Gebläsewelle (6), die von der Antriebswelle über ein Untersetzungsgetriebe (21) in Drehung versetzt wird, nach einem der vorstehenden Ansprüche, wobei das Hohlrad (33) an einem Statorgehäuse der Turbomaschine befestigt ist und der Planetenradträger (32) mit der Gebläsewelle (6) gekoppelt ist, um diese um die Längsachse in Drehung zu versetzen.

8. Turbomaschine nach dem vorstehenden Anspruch, **dadurch gekennzeichnet, dass** das Untersetzungsgetriebe (21) und die elektrische Maschine (50) in einem Schmiergehäuse (22) angeordnet sind, das vor einem Innengehäuse angeordnet ist.

9. Turbomaschine nach einem der Ansprüche 7 und 8, **dadurch gekennzeichnet, dass** das Sonnenrad mit der Antriebswelle (14) zum Drehen um die Längsachse gekoppelt ist.

10. Verfahren zum modularen Zusammenbau einer Turbomaschine (10) nach dem vorstehenden Anspruch, **dadurch gekennzeichnet, dass** es die folgenden Schritte umfasst:
- Montieren des Geschwindigkeitsuntersetzungsgetriebes (21) nach einem der Ansprüche 1 bis 6,
- Integrieren der elektrischen Maschine (50) in das Geschwindigkeitsuntersetzungsgetriebe (50), indem der Rotor (51) auf den Planetenradträger und der Stator (52) auf dem Hohlrad (33) montiert wird, und
- Montieren des Geschwindigkeitsuntersetzungsgetriebes und der elektrischen Maschine (50) in das Schmiergehäuse (22) der Turbomaschine.

## Claims

1. A reducer (21) with epicyclic gear train for an aircraft turbomachine (1), the reducer (21) comprising a sun gear (30) and a ring gear (33) which are centred on a longitudinal axis X and a planet carrier (32) which carries at least one planet gear (31) mounted so as to be able to rotate about a planet gear axis A parallel to the longitudinal axis X, the sun gear (30) being able to rotate about the longitudinal axis, the planet gear (31) meshing with both the sun gear (30) and the ring gear (33), the reducer (21) comprises an electric machine (50) integrated therewith, the reducer being **characterised in that** the planet carrier (32) is movable about the longitudinal axis and the ring gear (33) is stationary in rotation the reducer, and **in that** the electric machine comprises a rotor (51) mounted on the planet carrier (32) so as to be driven in rotation about the longitudinal axis X and a stator (52) mounted on the ring gear (33), an **in that** an electric harness (70) extends outside the ring gear (33) and at least one electric cable (71) connected to the stator (52) of the electric machine (50) circulates inside the electric harness (70).

2. The reducer (21) according to the preceding claim, **characterised in that** the stator (52) of the electric machine (50) extends around the rotor (51) of the electric machine.

3. The reducer (21) according to any of the preceding claims, **characterised in that** the stator (52) comprises a first annular part (53) centred on the longitudinal axis and extending the ring gear (33) downstream along the longitudinal axis.

4. The reducer (21) according to the preceding claim, **characterised in that** the first annular part (53) is fitted on the ring gear (33) or formed as an integral part of the ring gear (33).

5. The reducer (21) according to the preceding claim, **characterised in that** the rotor comprises a second annular part (55) mounted on a cage (58) of the planet carrier (32).

6. The reducer (21) according to any of the preceding claims, **characterised in that** the planet carrier (32) comprises an annular cage (58) carrying a plain bearing (62) on which the planet gear is mounted.

7. An aircraft turbomachine (1) comprising a drive shaft (14) of longitudinal axis X and a fan (2) having a fan shaft (6) driven in rotation by the drive shaft via a reducer (21) according to any of the preceding claims, the ring gear (33) being attached to a stator casing of the turbomachine and the planet carrier (32) being coupled to the fan shaft (6) in order to drive it in rotation about the longitudinal axis.

8. The turbomachine according to the preceding claim, **characterised in that** the reducer (21) and the electric machine (50) are arranged in a lubrication enclosure (22) arranged upstream of an internal casing.

9. The turbomachine according to any one of claims 7 and 8, **characterised in that** the sun gear is coupled to the drive shaft (14) for driving it in rotation about the longitudinal axis.

10. A method of modular assembly for a turbomachine (10) according to the preceding claim, **characterised in that** it comprises the following steps:
- assembling the speed reducer (21) according to any of claims 1 to 6,
- integrating the electric machine (50) with the speed reducer (50) by mounting the rotor (51) on the planet carrier and the stator (52) on the ring gear (33), and
- mounting the speed reducer and integrated electric machine (50) assembly in the lubrication enclosure (22) of the turbomachine.
